# EUROPÄISCHE PATENTSCHRIFT

(11) **EP 3 237 248 B1**
(45) Veröffentlichungstag und Bekanntmachung des Hinweises auf die Patenterteilung: **15.01.2020**
(21) Anmeldenummer: 15797301.7
(22) Anmeldetag: 18.11.2015
(51) Int. Cl.: B60K 35/00, B60Q 3/00, F16H 59/02, F16H 63/42, G02F 1/1335, G09F 13/04, H01L 25/10

(54) **ANZEIGEVORRICHTUNG ZUR ANZEIGE ZUMINDEST EINES SYMBOLS, SCHALTVORRICHTUNG UND VERFAHREN ZUM HERSTELLEN EINER ANZEIGEVORRICHTUNG**
DISPLAY DEVICE FOR DISPLAYING AT LEAST ONE SYMBOL, SWITCHING DEVICE, AND METHOD FOR MANUFACTURING A DISPLAY DEVICE
DISPOSITIF D'AFFICHAGE SERVANT À AFFICHER AU MOINS UN SYMBOLE, DISPOSITIF DE COMMUTATION, ET PROCÉDÉ SERVANT À FABRIQUER UN DISPOSITIF D'AFFICHAGE

(30) Priorität: 17.12.2014 DE 102014226146
(43) Veröffentlichungstag der Anmeldung: 01.11.2017
(73) Patentinhaber: ZF Friedrichshafen AG, 88046 Friedrichshafen (DE)
(72) Erfinder: KIRILENKO, Alexander, 49356 Diepholz (DE); RAKE, Ludger, 49439 Steinfeld (DE); STRASSBURG, Karsten, 30167 Hannover (DE)
(86) Internationale Anmeldenummer: PCT/EP2015/076896
(87) Internationale Veröffentlichungsnummer: WO 2016/096290

(56) Entgegenhaltungen:
- DE-A1-102004 009 208
- DE-A1-102013 005 886
- FR-A1- 2 913 135

## Beschreibung

Die vorliegende Erfindung bezieht sich auf eine Anzeigevorrichtung für ein Fahrzeug zur Anzeige zumindest eines Symbols, auf eine Schaltvorrichtung zum Schalten eines Fahrzeuggetriebes und auf ein Verfahren zum Herstellen einer Anzeigevorrichtung für ein Fahrzeug zur Anzeige zumindest eines Symbols.

Eine Anzeigevorrichtung kann beispielsweise in einem Fahrzeug eingesetzt werden, um einem Fahrer durch ein leuchtendes Symbol eine aktuelle Betriebsstufe des Fahrzeugs anzuzeigen.

Die DE 10 2004 009 208 A1 beschreibt ein entsprechendes Beleuchtungssystem für Anzeigen in Fahrzeugen. Die FR 2 913 135 A1 offenbart ein Beleuchtungssystem für ein Fahrzeug mit einer Oberflächenschicht und einer Symbolfläche zum Durchlassen von Licht, wobei die Oberflächenschicht und die Symbolfläche beabstandet zueinander angeordnet sind.

Vor diesem Hintergrund schafft die vorliegende Erfindung eine verbesserte Anzeigevorrichtung für ein Fahrzeug zur Anzeige zumindest eines Symbols, eine verbesserte Schaltvorrichtung zum Schalten eines Fahrzeuggetriebes sowie ein verbessertes Verfahren zum Herstellen einer Anzeigevorrichtung für ein Fahrzeug zur Anzeige zumindest eines Symbols gemäß den Hauptansprüchen. Vorteilhafte Ausgestaltungen ergeben sich aus den Unteransprüchen und der nachfolgenden Beschreibung.

Ein von einer Anzeigevorrichtung anzuzeigendes Symbol kann durch Ausleuchten einer Symbolfläche mit Licht angezeigt werden. Das Licht kann beispielsweise unter Verwendung einer Hintergrundbeleuchtung bereitgestellt und über einen Lichtschacht oder einen Lichtleiter zu der Symbolfläche geführt werden. Um unerwünschte Lichteffekte zu vermeiden, kann ein Spalt zwischen der Symbolfläche und einer lichtdurchlässigen Deckschicht angeordnet sein. Im Betrieb der Anzeigevorrichtung kann die ausgeleuchtete Symbolfläche zur Anzeige des Symbols für einen Be trachter durch die Deckschicht hindurch sichtbar sein. Gemäß einer Ausführungsform kann die Symbolfläche und somit das Symbol auch bei ausgeschalteter Hintergrundbeleuchtung für einen Betrachter erkennbar sein.

Eine Anzeigevorrichtung zur Anzeige zumindest eines Symbols weist die folgenden Merkmale auf:
eine lichtdurchlässige Deckschicht;
eine Symbolschicht mit einer lichtdurchlässigen Symbolfläche für ein von der Vorrichtung anzuzeigendes Symbol und einer die Symbolfläche umgebenden lichtundurchlässigen Fläche, wobei die Symbolfläche durch einen Spalt beabstandet zu der Deckschicht angeordnet ist; und
eine Lichtleiteinrichtung, die ausgeformt ist, um Licht auf eine der Deckschicht abgewandten Seite der Symbolfläche zu leiten.

Die Anzeigevorrichtung kann beispielsweise für ein Fahrzeug verwendet werden, beispielsweise für einen Schaltknauf für eine Schaltvorrichtung für ein Fahrzeuggetriebe. Die Anzeigevorrichtung kann verwendet werden, um ein oder eine Mehrzahl von Symbolen anzuzeigen. Ein Symbol kann beispielsweise eine Ziffer, ein Buchstabe oder ein Piktogramm sein. Im Betrieb der Anzeigevorrichtung kann ein solches Symbol durch eine Hintergrundbeleuchtung beleuchtet sein. Die lichtdurchlässige Deckschicht kann farblos ausgeführt sein. Die lichtdurchlässige Deckschicht kann eine oder mehrere Schichten umfassen. Die lichtdurchlässige Deckschicht kann eine Hartstoffbeschichtung oder eine Beschichtung zum Ausbilden eines Tiefeneffekts umfassen. Die Deckschicht kann beispielsweise als eine Kunststoffschicht oder eine Glasschicht ausgeführt sein und beispielsweise als eine klare Komponente aufgefasst werden. Die Deckschicht kann eine äußere Oberfläche der Anzeigevorrichtung bilden und somit Umwelteinflüssen ausgesetzt sein. Die Lichtleiteinrichtung kann gemäß einer Ausführungsform ein Lichtschacht sein oder umfassen. Der Lichtschacht kann durch Wände einer lichtundurchlässigen Zwischenkomponente gebildet sein. Der Lichtschacht kann als ein zylinderförmiger Raum ausgeführt sein, der auf einer Seite durch die Symbolschicht und zusätzlich oder alternativ durch die Deckschicht abgeschlossen sein kann. Die Symbolschicht je nach Ausführungsform innerhalb des Lichtschachts oder den Lichtschacht überspannend angeordnet sein. Somit kann eine Fläche der Symbolschicht auf einen Durchmesser des Lichtschachts begrenzt sein oder sich über den Durchmesser des Lichtschachts hinaus erstrecken. Gemäß einer Ausführungsform kann die Lichtleiteinrichtung als ein Lichtleiter ausgeführt sein oder einen solchen Lichtleiter umfassen. In diesem Fall kann die Symbolschicht an eine Oberfläche des Lichtleiters angrenzen. Die lichtdurchlässige Symbolfläche und die lichtundurchlässige Fläche der Symbolschicht können direkt aneinandergrenzen. Die Symbolfläche kann einer Fläche des von der Anzeigevorrichtung anzuzeigenden Symbols entsprechen. Das auf die Symbolfläche einfallende Licht kann von einem Leuchtmittel, beispielsweise einer Leuchtdiode erzeugt werden. Ein Lichtpfad des Lichts kann von der Lichtleiteinrichtung durch die Symbolfläche, durch den Spalt und durch die Deckschicht hindurch verlaufen. Somit kann das Licht nach Passieren der Symbolfläche in den Spalt eingekoppelt und nach Passieren des Spalts in die Deckschicht eingekoppelt werden. Nach Verlassen der Deckschicht kann das Licht im Betrieb der Anzeigevorrichtung von einem Auge eines Betrachters der Anzeigevorrichtung erfasst werden. Aufgrund des Spalts kann eine Rückkopplung des Lichts aus der Deckschicht in Richtung der Symbolfläche oder einer benachbart angeordneten weiteren Symbolfläche verhindert werden.

Der Spalt zwischen der Symbolfläche und der Deckschicht kann mit einem Medium gefüllt sein, das ein Übertreten von innerhalb der lichtdurchlässigen Deckschicht total reflektiertem Licht in den Spalt verhindert. Das Medium kann beispielsweise ein Gas oder ein Vakuum sein. Auf diese Weise kann vermieden werden, dass sich innerhalb der Deckschicht ausbreitende Lichtstrahlen auf die Symbolfläche treffen und dadurch unerwünschte Lichteffekte hervorrufen. Beispielsweise kann der Spalt mit Luft gefüllt sein. Dies ist kostengünstig zu realisieren.

Die Symbolfläche kann Farbmittel umfassen. Durch die Farbmittel kann eine Lichtfarbe des anzuzeigenden Symbols definiert werden. Die Lichtfarbe kann eine Farbe darstellen, in der das Symbol für einen Betrachter der Anzeigevorrichtung erscheint. Somit kann für die Deckschicht eine farblose Folie verwendet werden und es ist keine zusätzliche farbige Zwischenschicht erforderlich.

Die lichtdurchlässige Deckschicht kann aus einem synthetischen Polymer oder einem thermoplastischen Kunststoff hergestellt sein. Eine solche Folie eignet sich auch zur Realisierung einer gebogenen Symbolfläche. Die Deckschicht kann eine vorgehärtete oder ausgehärtete Lackschicht als Hartstoffbeschichtung aufweisen. Eine solche Lackschicht kann sehr dünn ausgeführt werden und dennoch eine sehr hohe Kratzfestigkeit aufweisen.

Gemäß einer Ausführungsform kann die Lichtleiteinrichtung als ein Lichtschacht ausgeführt sein. Die Symbolschicht kann eine Öffnung des Lichtschachts überspannen. Die Symbolfläche kann dabei vollständig im Bereich der Öffnung des Lichtschachts angeordnet und somit vollständig von innerhalb des Lichtschachts geleiteten Lichts ausgeleuchtet werden. Die Symbolschicht kann mit der lichtundurchlässigen Fläche an einer den Lichtschacht ausformenden Zwischenkomponente anliegen. Sofern die Anzeigevorrichtung zur Anzeige mehrerer Symbole geeignet ist, kann die Symbolschicht einstückig ausgeführt sein und Öffnungen mehrerer Lichtschächte überspannen. Dies ermöglicht eine einfache und kostengünstige Herstellung der Anzeigevorrichtung.

Beispielsweise kann die Symbolschicht als eine Folie ausgeführt sein. Dabei kann es sich um eine einlagige oder mehrlagige Folie handeln. Eine einlagige Folie kann zumindest zwei Bereiche umfassen, von denen einer zum Ausformen der lichtdurchlässigen Symbolfläche lichtdurchlässig und der andere zum Ausformen der lichtundurchlässigen Fläche lichtundurchlässig ist. Die zwei Bereiche können sich beispielsweise in ihren Materialien unterscheiden. Bei einer mehrlagigen Folie kann beispielsweise eine Trägerfolie zum Ausformen der lichtundurchlässigen Fläche mit einer lichtundurchlässigen Schicht beschichtet sein. Eine solche lichtundurchlässige Schicht kann eine dunkle, beispielsweise schwarze Lackschicht sein, die auf die Trägerfolie aufgebracht sein kann. Durch eine solche Lachschicht kann zuverlässig verhindert werden, dass das Licht die Symbolschicht außerhalb der Symbolfläche durchdringt.

Somit kann die lichtundurchlässige Fläche und zusätzlich oder alternativ die Symbolfläche mehrlagig ausgeformt sein. Eine als Folie ausgeführte Symbolschicht lässt sich dünn ausführen und einfach verarbeiten.

Gemäß einer Ausführungsform kann die Symbolschicht als eine plane Fläche ausgeführt sein. Eine solche plane Fläche, beispielsweise eine plane Folie, kann einfach verarbeitet werden. In diesem Fall kann die Symbolschicht beispielsweise formschlüssig mit der Deckschicht verbunden sein. Im Unterschied zu einer stoffschlüssigen Verbindung, bei der Deckschicht und Symbolschicht übergangslos verbunden wären, kann durch eine formschlüssige Verbindung der Spalt zwischen der Deckschicht und der Symbolschicht ausgeformt werden.

Gemäß der Erfindung weist die Symbolschicht eine die Symbolfläche umfassende Auswölbung zum Ausformen des Spalts auf. Im Bereich der Auswölbung kann die Symbolschicht beispielsweise in den Lichtschacht hineinragen. Unter der Auswölbung kann ein gekrümmter Bereich der Symbolschicht verstanden werden. Durch die Auswölbung kann auf einer der Deckschicht zugewandten Seite der Symbolschicht eine Vertiefung ausgeformt werden, die die Form einer Senke aufweisen kann. Durch den die Vertiefung ausfüllenden Raum kann der Spalt ausgebildet werden. Auf diese Weise kann eine Ausdehnung des Spalts durch die Form der Auswölbung definiert werden. In diesem Fall kann die Symbolschicht beispielsweise formschlüssig oder stoffschlüssig mit der Deckschicht verbunden sein. Bei einer stoffschlüssigen Verbindung kann die Symbolschicht außerhalb der Wölbung mit der Deckschicht stoffschlüssig verbunden sein.

Gemäß einer Alternative der Erfindung weist die Deckschicht gegenüberliegend zu der Symbolfläche eine Ausnehmung zum Ausformen des Spalts auf. Dadurch lässt sich der Spalt einfach dimensionieren. In diesem Fall kann die Symbolschicht wiederum beispielsweise formschlüssig oder stoffschlüssig mit der Deckschicht verbunden sein. Bei einer stoffschlüssigen Verbindung kann die Symbolschicht außerhalb der Ausnehmung mit der Deckschicht stoffschlüssig verbunden sein.

Gemäß einer weiteren Ausführungsform kann die Symbolschicht an einer der Deckschicht zugewandten Oberfläche Lichtleiters angeordnet sein. Durch die Verwendung des Lichtleiters kann eine sehr gute Leitung des Lichts zu der Symbolfläche gewährleistet werden. Das Licht kann an den Seitenwänden des Lichtleiters total reflektiert werden. Der Lichtleiter kann gemäß einer Ausführungsform in einem Lichtschacht angeordnet sein. Alternativ kann der Lichtleiter frei stehend sein.

Wenn die Symbolschicht an dem Lichtleiter angeordnet ist, kann zum Ausformen des Spalts eine Abstandsschicht zwischen der Deckschicht und der lichtundurchlässigen Fläche der Symbolschicht angeordnet sein. Zumindest ein der Symbolfläche gegenüberliegender Bereich kann von der Abstandsschicht ausgespart werden. Auf diese Weise kann der Spalt einfach unter Verwendung der Abstandsschicht hergestellt werden. Die Abstandsschicht kann beispielsweise durch eine Folie oder eine Lackschicht ausgeformt sein.

Ein Leuchtmittel kann zum Ausstrahlen des Lichts an einem der Symbolfläche abgewandten Ende der Lichtleiteinrichtung angeordnet sein. Das Leuchtmittel kann ausgebildet sein, um Licht in einem für den Menschen sichtbaren Spektralbereich auszustrahlen. Bei dem Licht kann es sich um weißes Licht oder um Licht mit einer von weiß abweichenden Farbe handeln. Das Leuchtmittel kann beispielsweise in dem genannten Lichtschacht oder einer Öffnung des Lichtschachts gegenüberliegend angeordnet sein.

Die Anzeigevorrichtung kann zur Anzeige mehrere Symbole verwendet werden. Beispielsweise können zwei, drei oder mehr Symbole angezeigt werden. Dazu kann eine der Anzahl anzuzeigender Symbole entsprechende Anzahl von Symbolflächen vorgesehen sein. Somit kann die die Symbolschicht zumindest eine weitere lichtdurchlässige Symbolfläche für zumindest ein von der Anzeigevorrichtung anzuzeigendes weiteres Symbol aufweisen. Die Symbolschicht kann dabei einstückig oder mehrstückig ausgeführt sein. Die zumindest eine weitere Symbolfläche kann von der lichtundurchlässigen Fläche oder einer weiteren lichtundurchlässigen Fläche umgeben sein und durch den Spalt oder einen weiteren Spalt beabstandet zu der Deckschicht angeordnet sein. Zumindest eine weitere Lichtleiteinrichtung kann vorgesehen sein, um weiteres Licht auf eine der Deckschicht abgewandten Seite der zumindest einen weiteren Symbolfläche zu leiten. Auf diese Weise können von der Anzeigevorrichtung nebeneinander zwei oder mehr Symbole angezeigt werden.

Die Anzeigevorrichtung kann beispielsweise im Zusammenhang mit einer Schaltvorrichtung zum Schalten eines Fahrzeuggetriebes eingesetzt werden. Eine entsprechende Schaltvorrichtung, beispielsweise ein Schalthebel, kann eine entsprechende Anzeigevorrichtung, beispielsweise zum Anzeigen einer eingestellten Betriebsstufe des Fahrzeuggetriebes unter Verwendung des zumindest einen Symbols aufweisen. Die Anzeigevorrichtung kann mit einer geringen Gesamtdicke realisiert werden und eignet sich dadurch besonders für den Einsatz bei einer Schaltvorrichtung. Zudem kann die Anzeigevorrichtung mit einer gewölbten Deckschicht ausgeführt werden, sodass die Anzeigevorrichtung auch zum Ausformen einer gewölbten Außenoberfläche der Schaltvorrichtung verwendet werden kann.

Ein Verfahren zum Herstellen einer genannten Anzeigevorrichtung für ein Fahrzeug umfasst die folgenden Schritte:
Bereitstellen einer lichtdurchlässigen Deckschicht, einer Symbolschicht mit einer lichtdurchlässigen Symbolfläche für ein von der Anzeigevorrichtung anzuzeigendes Symbol und einer die Symbolfläche umgebenden lichtundurchlässigen Fläche sowie einer Lichtleiteinrichtung; und
Kombinieren der Deckschicht, der Symbolschicht und der Lichtleiteinrichtung, wobei die Symbolfläche durch einen Spalt beabstandet zu der lichtdurchlässigen Deckschicht angeordnet wird, und die Lichtleiteinrichtung angeordnet wird, um Licht auf eine der Deckschicht abgewandten Seite der Symbolfläche zu leiten, wobei die Symbolschicht eine die Symbolfläche umfassende Auswölbung zum Ausformen des Spalts aufweist oder die Deckschicht gegenüberliegend zu der Symbolfläche eine Ausnehmung zum Ausformen des Spalts aufweist.

Im Schritt des Kombinierens können einzelne Elemente der Anzeigevorrichtung beispielsweise formschlüssig und zusätzlich oder alternativ stoffschlüssig miteinander verbunden werden. Dabei kann auch ein Laserdurchlichtschweißverfahren eingesetzt werden.

Die Erfindung wird anhand der beigefügten Zeichnungen beispielhaft näher er-läutert. Es zeigen:
- Fig. 1: eine schematische Darstellung eines Fahrzeugs mit einer Anzeigevorrichtung zur Anzeige zumindest eines Symbols;
- Fig. 2: eine schematische Darstellung einer Anzeigevorrichtung zur Anzeige zumindest eines Symbols;
- Fig. 3: eine Draufsicht auf eine Anzeigevorrichtung zur Anzeige zumindest eines Symbols;
- Fig. 4: eine schematische Darstellung einer nicht-erfindungsgemäßen Anzeigevorrichtung zur Anzeige zumindest eines Symbols;
- Fig. 5: eine schematische Darstellung einer nicht-erfindungsgemäßen Anzeigevorrichtung zur Anzeige zumindest eines Symbols;
- Fig. 6: eine schematische Darstellung einer Anzeigevorrichtung zur Anzeige zumindest eines Symbols;
- Fig. 7: eine schematische Darstellung einer Anzeigevorrichtung zur Anzeige zumindest eines Symbols;
- Fig. 8: eine schematische Darstellung einer nicht-erfindungsgemäßen Anzeigevorrichtung zur Anzeige zumindest eines Symbols; und
- Fig. 9: ein Ablaufdiagramm eines Verfahrens zum Herstellen einer Anzeigevorrichtung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

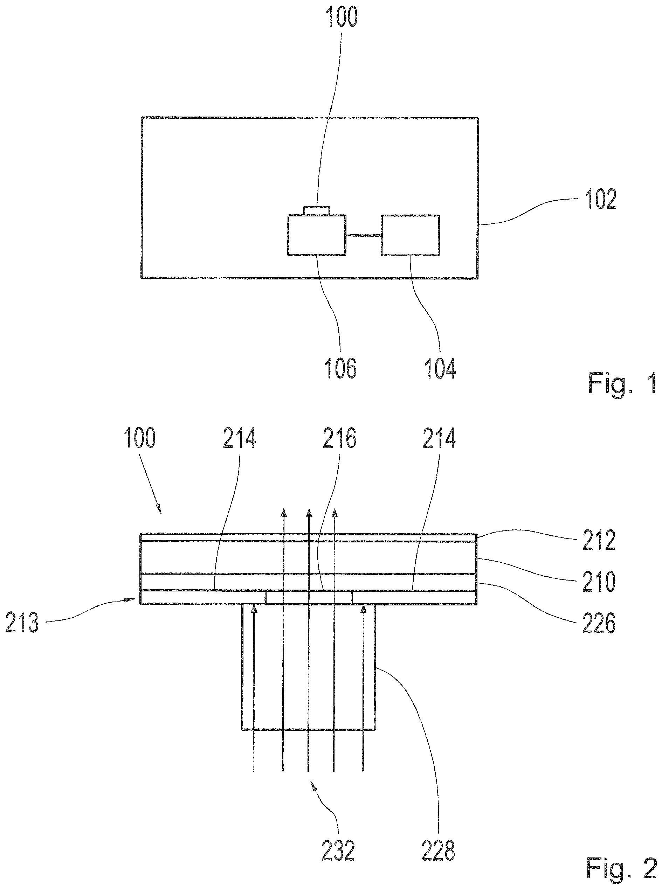

Fig. 1 zeigt eine schematische Darstellung einer Anzeigevorrichtung 100 zur Anzeige zumindest eines Symbols gemäß einem Ausführungsbeispiel der vorliegenden Erfindung. Beispielhaft ist die Anzeigevorrichtung 100 in einem Fahrzeug 102, beispielsweise einem Personenkraftwagen angeordnet. Das Fahrzeug 102 weist ein Getriebe 104 und eine Schaltvorrichtung 106 zum Schalten des Getriebes 104 auf. Über die Schaltvorrichtung 106 kann ein Fahrer des Fahrzeugs 102 unterschiedliche Betriebsstufen, beispielsweise unterschiedliche Gänge oder unterschiedliche Betriebsmodi des Getriebes 104 oder des Fahrzeugs 102 einstellen. Die Anzeigevorrichtung 100 ist ausgebildet, um die einstellbaren Betriebsstufen dem Fahrer mittels Symbolen anzuzeigen. Beispielsweise kann die Anzeigevorrichtung 100 dazu an einem Schalthebel der Schaltvorrichtung 106 angeordnet sein. Zum Einstellen einer Betriebsstufe kann der Fahrer beispielsweise den Schalthebel in eine der Betriebsstufe zugeordnete Schaltgasse führen.

Gemäß einem Ausführungsbeispiel ist die Anzeigevorrichtung 100 als eine Mehrkomponenten-Symboleinlage oder als ein Mehrkomponenten-Display ausgeführt. Die Anzeigevorrichtung 100 kann als ausleuchtbare Komponente, beispielsweise an einer Schaltung, beispielsweise im Schaltknauf genutzt werden, um beispielsweise die eingelegte Schaltgasse (P, R, N, D/S, +, -, etc.) anzuzeigen.

Die Anzeigevorrichtung 100 kann auch im Zusammenhang mit anderen Komponenten eines Fahrzeugs 102 verwendet werden. Ferner kann die Anzeigevorrichtung 100 auch für Anwendungen außerhalb des Fahrzeugbereichs, beispielsweise in der Gebäudetechnik, eingesetzt werden.

Fig. 2 zeigt eine schematische Darstellung einer Anzeigevorrichtung 100 zur Anzeige zumindest eines Symbols gemäß einem Ausführungsbeispiel der vorliegenden Erfindung. Die Anzeigevorrichtung 100 ist in einer Querschnittsdarstellung gezeigt. Die Anzeigevorrichtung 100 ist ausgebildet, um ein Symbol anzuzeigen. Die Anzeigevorrichtung 100 kann erweitert werden, um mehrere Symbole anzuzeigen, beispielsweise, wie anhand von Fig. 1 beschrieben, mehrere Symbole zur Anzeige unterschiedlicher Schaltstellungen einer Schaltung.

Die Anzeigevorrichtung 100 weist eine lichtdurchlässige Deckschicht 210 auf. Optional weist die Deckschicht 210 auf einer Seite, die eine für einen Betrachter der Anzeigevorrichtung 100 sichtbare Oberfläche der Anzeigevorrichtung 100 darstellt, eine lichtdurchlässige Hartstoffbeschichtung 212 auf, durch die die Anzeigevorrichtung 100 vor Beschädigungen, beispielsweise vor Kratzern, geschützt werden kann. Auf einer Rückseite, also einer dem im verbauten Zustand der Anzeigevorrichtung 100 dem Betrachter abgewandten Seite der Deckschicht 210 ist eine Symbolschicht 213 angeordnet. Die Symbolschicht 213 umfasst einen als lichtundurchlässige Fläche 214 ausgeführten Bereich und einen als lichtdurchlässige Symbolfläche 216 ausgeführten Bereich auf. Die Symbolfläche 216 definiert eine Fläche des von der Anzeigevorrichtung 100 anzuzeigenden Symbols. Die Symbolfläche 216 ist von der lichtundurchlässigen Fläche 214 umschlossen.

Zwischen der Symbolfläche 216 und der Deckschicht 210 ist ein Spalt 226 angeordnet. Der Spalt 226 kann beispielsweise als ein Luftspalt ausgeführt sein, der vollständig mit Luft ausgefüllt ist. Gemäß unterschiedlicher Ausführungsbeispiele kann der Spalt eine Fläche umfassen, die der Symbolfläche 216 entspricht und mit der Symbolfläche 216 fluchtet, oder eine Fläche umfassen, die vollständig mit der Symbolfläche 216 überlappt und sich über die Grenzen der Symbolfläche 216 hinauserstreckt und somit zumindest teilweise mit der lichtundurchlässigen Fläche 214 überlappt.

Somit weist die Anzeigevorrichtung 100 einen stapelförmigen Aufbau aus der Symbolschicht 213, den Spalt 226 und der Deckschicht 210 auf. Die Dicke des Spalts 226 ist gemäß einem Ausführungsbeispiel geringer als die Dicke der Symbolschicht 213 und die Dicke der Symbolschicht 213 ist wiederum geringer als die Dicke der Deckschicht 210.

Auf der dem Spalt 226 abgewandten Seite der Symbolfläche 216 ist eine Lichtleiteinrichtung 230 angeordnet. Die Lichtleiteinrichtung 230 wird verwendet, um Licht 232 zu der Symbolfläche 216 zu leiten.

Das Licht 232, das von einem geeigneten Leuchtmittel bereitgestellt werden kann, durchdringt nacheinander die Lichtleiteinrichtung 230, die Symbolfläche 216, den Spalt 226, die Deckschicht 210 und gegebenenfalls die optionale Beschichtung 212 und kann anschließend von einem Betrachter erfasst werden. Das Licht 232 wird von der lichtundurchlässigen Fläche 214 abgeschirmt, sodass ein nach Durchdringen der Symbolfläche 216 von dem Licht 232 gebildeter Lichtstrahl eine der Symbolfläche 216 entsprechende Querschnittsfläche aufweist, durch die dem Betrachter das anzuzeigende Symbol visuell dargestellt wird. Ein solches Leuchtmittel kann Teil der Anzeigevorrichtung 100 sein oder separat bereitgestellt sein.

Die Deckschicht 210 und die Symbolfläche 216 sind gemäß diesem Ausführungsbeispiel farblos und transparent. Alternativ kann die Deckschicht 210 und/oder die Symbolfläche 216 farbig ausgeführt sein, um das Symbol beispielsweise in einer gewünschten Farbe erscheinen zu lassen.

Gemäß unterschiedlicher Ausführungsbeispiele kann die Lichtleiteinrichtung 228 als ein Lichtschacht, also ein beispielsweise mit einem Gas gefüllter Raum, oder als ein Lichtleiter, also als ein lichtleitender Körper, ausgeführt sein.

Durch das Licht 232 kann die Symbolfläche 216 in einem Betriebsmodus der Anzeigevorrichtung 100 ausgeleuchtet werden, sodass die Symbolfläche 216 für einen Betrachter der Anzeigevorrichtung 100 als eine das Symbol darstellende selbstleuchtende Fläche erscheint. In einem inaktiven Betriebsmodus, in dem das Licht 232 nicht bereitgestellt wird, kann die Symbolfläche 216 aufgrund von von außen auf die Anzeigevorrichtung 100 treffenden Umgebungslichts für den Betrachter dennoch als eine das Symbol darstellende Fläche erkennbar sein. Alternativ kann die Anzeigevorrichtung 100 so ausgeführt sein, dass die Symbolfläche 216 und somit das Symbol ohne die Beleuchtung durch das Licht 232 nicht erkennbar ist.

Gemäß diesem Ausführungsbeispiel ist die Deckschicht 210 plan ausgeführt. Alternativ kann die Deckschicht 210 und gegebenenfalls ebenfalls die Symbolfläche 216 gebogen ausgeführt sein.

Vorteilhafterweise ermöglicht der beschriebene Ansatz eine Überstrahlungsvermeidung bei Anzeigevorrichtungen 100 in Form von hinterleuchteten Displays.

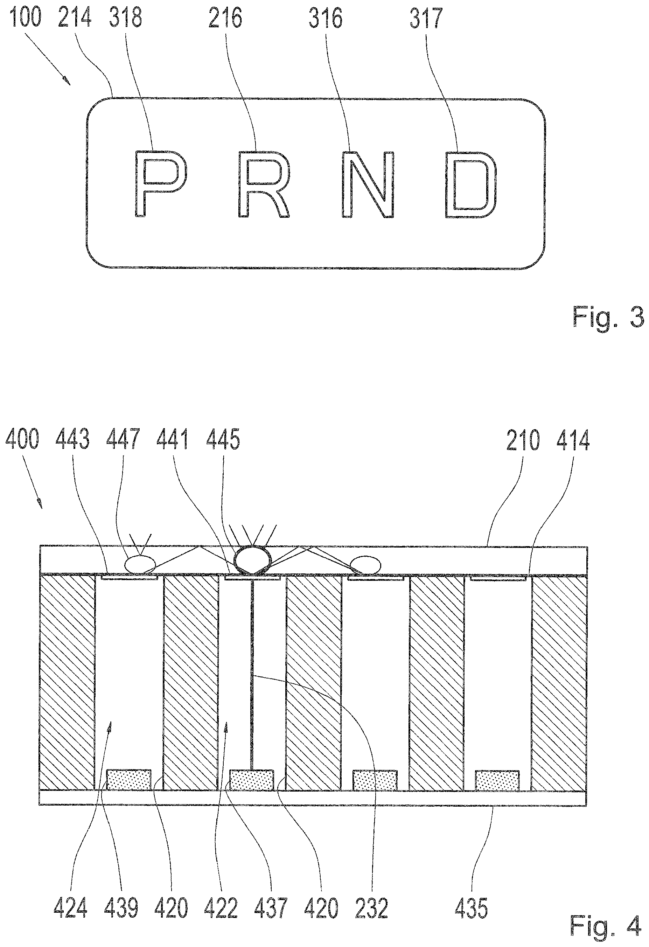

Fig. 3 zeigt eine Draufsicht auf eine Anzeigevorrichtung 100 zur Anzeige zumindest eines Symbols gemäß einem Ausführungsbeispiel der vorliegenden Erfindung. Eine für einen Betrachter der Anzeigevorrichtung 100 sichtbare Oberfläche der Anzeigevorrichtung 100 weist hier beispielhaft eine im Wesentlichen rechteckige Form mit abgerundeten Ecken auf. Die Anzeigevorrichtung 100 ist in einem Zustand ohne Hintergrundbeleuchtung gezeigt.

Die Anzeigevorrichtung 100 weist vier anzuzeigende Symbole auf, die durch eine Symbolfläche 216 zum Darstellen eines Symbols "R", eine Symbolfläche 316 zum Darstellen eines Symbols "N", eine Symbolfläche 317 zum Darstellen eines Symbols "D" und eine eine Symbolfläche 318 zum Darstellen eines Symbols "P" gebildet werden.

Für den Betrachter ist die lichtundurchlässige Beschichtung 214 der Anzeigevorrichtung 100 als dunkle, hier schwarze Fläche zu erkennen. Von der lichtundurchlässigen Beschichtung 214 sind die Symbolflächen 216, 316, 317, 318 ausgenommen. Durch die die Symbolflächen 216, 316, 317, 318 bildenden Ausnehmungen der lichtundurchlässigen Beschichtung 214 hindurch sind die hellen, hier weißen, Diffusorelemente unter den Symbolflächen 216, 316, 317 zu erkennen.

Wird beispielsweise die Symbolfläche 216 hinterleuchtet, wie es in Fig. 2 dargestellt ist, so leuchtet die Symbolfläche 216 aus Sicht eines Betrachters auf und das durch die Symbolfläche 216 dargestellte Symbol "R" ist für den Betrachter deutlich wahrnehmbar.

Gemäß einem Ausführungsbeispiel sind alle Symbole der Anzeigevorrichtung 100, hier beispielsweise "P", "R", "N" und "D" grundausgeleuchtet. Wird für das Anwendungsbeispiel eines Schalthebels ein Gang eingelegt, so wird dieses durch ein deutlich helleres Aufleuchten des den Gang repräsentierenden Symbols kenntlich gemacht, beispielsweise unter Verwendung einer LED (Spotbeleuchtung).

Durch die Verwendung des Spalts kann vermieden werden, dass bei einer gleichfarbigen Spotausleuchtung und Grundausleuchtung durch eine Überstrahlung die Grundausleuchtung der Symbole inhomogen wird. Bei unterschiedlichen Farben der Spot- und Grundbeleuchtung tritt durch die Vermeidung dieser Überstrahlung keine Farbverfälschung der grundausgeleuchteten Symbole auf.

Fig. 4 zeigt eine schematische Darstellung einer nicht-erfindungsgemäßen Anzeigevorrichtung 400 zur Anzeige zumindest eines Symbols. Die gezeigte Anzeigevorrichtung 400 ist ausgebildet, um vier Symbole anzuzeigen.

Die Anzeigevorrichtung 400 weist eine lichtdurchlässige Deckschicht 210 auf, auf deren Unterseite eine lichtundurchlässige Beschichtung 414 angeordnet ist, die im Bereich von Symbolflächen zur Darstellung der Symbole Aussparungen aufweist. Auf einer der Deckschicht 210 abgewandten Oberfläche der lichtundurchlässigen Beschichtung 414 ist eine lichtundurchlässige Zwischenkomponente 420 aufgebracht. Die Zwischenkomponente 420 weist zum Bilden von hier vier Lichtschächte 422, 424, von denen nur die beiden links dargestellten mit Bezugszeichen versehen sind, im Bereich der Symbolflächen je eine Aussparung auf. Die Zwischenkomponente 220 ist zwischen der lichtundurchlässigen Beschichtung 414 und einer Leiterplatte 435 mit Leuchtmitteln 437, 439 der Anzeigevorrichtung 400 angeordnet. Die Symbolflächen sind je von einer Farbschicht 441, 443 überdeckt, von denen wiederum nur die beiden links dargestellten mit Bezugszeichen versehen sind.

Das in dem Lichtschacht 424 angeordnete Leuchtmittel 437 ist im Betrieb gezeigt. Das Leuchtmittel 437 ist ausgebildet, um Licht 232 auszustrahlen. Das Licht 232 trifft auf die Farbschicht 441 und erzeugt innerhalb der Deckschicht 210 eine Abstrahlcharakteristik 445 zur Anzeige eines Symbols. Ein Teil des von der Farbschicht 441 in die Deckschicht 210 übertragenen Lichts 232 wird an einer äußeren Oberfläche der Deckschicht 210 reflektiert und trifft beispielsweise auf die benachbarte Farbschicht 443 des zu dem Lichtschacht 224 benachbart angeordneten Lichtschachts 422, wodurch eine unerwünschte Abstrahlcharakteristik 447 erzeugt wird.

Gemäß einem Ausführungsbeispiel ist die Deckschicht 210 aus Polymethylmethacrylat (PMMA) oder Polycarbonate (PC) hergestellt. Die lichtundurchlässige Schicht 4414 kann als lackierte PC oder PMMA Folie ausgeführt sein. Die Farbschichten 441, 443 können als weiße Lackierung ausgeführt sein. Die Leiterplatte 435 kann als eine Leiterplatte 435 mit Leuchtdioden als Leuchtmittel 437, 449 ausgeführt sein.

Bei Display- und Symboleinlagenanwendungen mit "Tiefeneffekt", bei dem die anzuzeigenden Symbole unterhalb einer PMMA / PC Schicht von meist ca. 1,5mm Dicke dargestellt wird als erstes eine ca. 0,25mm dünne PC-Folie schwarz lackiert, die gewünschten Symbole werden freigelasert und anschließend werden die die Symbole darstellenden Symbolflächen wieder weiß lackiert. Dann wird diese Folie verformt und für die Glasoptik oder den Tiefeneffekt mit einem PMMA überspritzt. Diese Symbole werden dann einzeln jeweils Spot- oder grundausgeleuchtet.

Wird eine Symbolfläche mit einer Spotbeleuchtung dargestellt, so kann diese hellere Beleuchtung in die daneben liegenden weißen Symbole überstrahlen. Dies ergibt sich aus dem Display oder der Symboleinlage. Trifft hier das Licht gerichtet auf die weiß lackierte Symbolik, werden die Lichtstrahlen in einem großen Abstrahlwinkel (lambertsche - Abstrahlcharakteristik) in das darüber liegende PMMA oder PC 210 weiter geleitet. Aufgrund von Totalreflexion, kann das Licht innerhalb dieser "Glasschicht" 210 bis zu den daneben liegenden Symbolen gelangen. Treffen diese bereits etwas abgeschwächten Lichtstrahlen auf die danebenliegenden weißen Symbole, werden diese aufgrund der physikalischen Eigenschaften der weißen Lackierung nahezu lambertsch zurückreflektiert und addieren sich in diesen Bereichen mit der Grundausleuchtung, wie es ihn Fig. 4 gezeigt ist.

Um zu verhindern, dass durch innere Totalreflexion das Licht an die weiße Symbolik bzw. Lackierung 441, 443 gelangt, wird zwischen dem weißen und den klaren Material (PC oder PMMA) ein Luftspalt angeordnet. Dies führt dazu, dass das Licht gerichtet durch Totalreflexion weiter geleitet wird und nicht am weißen Material (Lack o.ä.) 441, 443 lambertsch in Richtung des Beobachters reflektiert wird.

Eine Möglichkeit um dies zu erreichen besteht darin, die Überstrahlung mithilfe eines Diffusors und ohne weiße Hinterlackierung zu verhindern. Eine weitere Möglichkeit, wie sie bereits anhand von Fig. 2 gezeigt ist, wird anhand der folgenden Ausführungsbeispiele detailliert beschrieben.

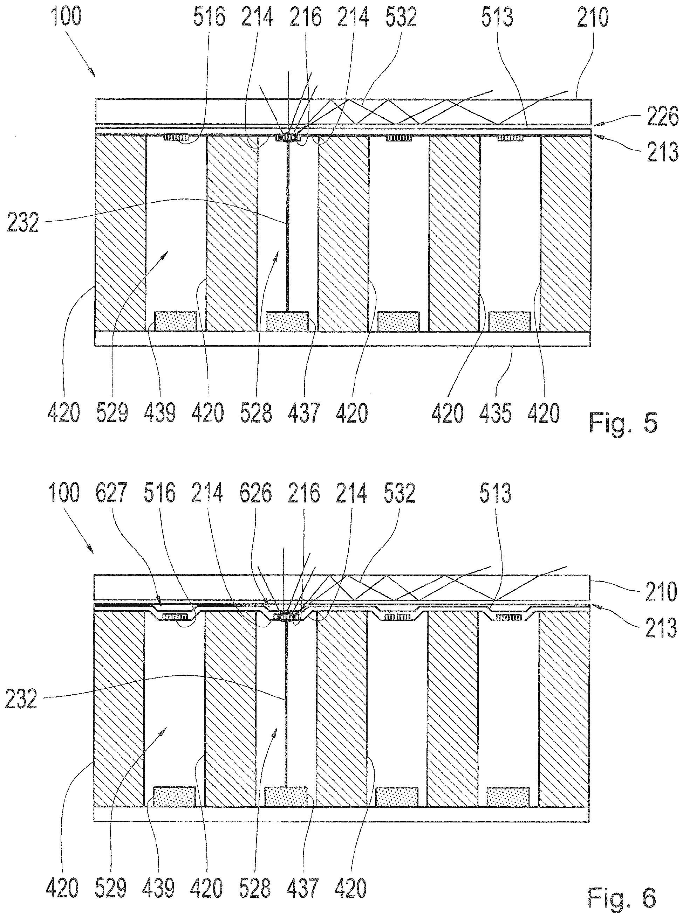

Fig. 5 zeigt eine schematische Darstellung einer nichterfindungsgemäßen Anzeigevorrichtung 100 zur Anzeige zumindest eines Symbols gemäß einem Ausführungsbeispiel der vorliegenden Erfindung. Dabei kann es sich um ein Ausführungsbeispiel der anhand von Fig. 2 beschriebenen Anzeigevorrichtung handeln.

Die Anzeigevorrichtung 100 ist ausgebildet, um beispielhaft vier Symbole anzuzeigen, wobei im Folgenden die zur Anzeige eines der Symbole verwendeten Einrichtungen der Anzeigevorrichtung 100 näher beschrieben werden. Die zur Anzeige der weiteren Symbole verwendeten Einrichtungen der Anzeigevorrichtung 100 sind entsprechend aufgebaut.

Die Anzeigevorrichtung 100 weist eine lichtdurchlässige Deckschicht 210, eine Symbolschicht 213 und einen zwischen der Symbolschicht 213 und der Deckschicht 210 angeordneten Spalt 226 auf. Die Symbolschicht 213 umfasst einen als lichtundurchlässige Fläche 214 ausgeführten Bereich und zur Darstellung des einen beschriebenen Symbols einen als lichtdurchlässige Symbolfläche 216 ausgeführten Bereich auf. Die Symbolfläche 216 ist von der lichtundurchlässigen Fläche 214 umschlossen. Die Symbolschicht 213 weist gemäß diesem Ausführungsbeispiel eine optionale Trägerschicht 513 auf, auf die eine lichtundurchlässige Schicht zum Ausformen der lichtundurchlässigen Fläche 214 und eine lichtdurchlässige Schicht zum Ausformen der Symbolfläche 216 aufgebracht ist. Die Trägerschicht 513 ist auf der dem Spalt 226 zugewandten Seite der Symbolschicht 213 angeordnet.

Gemäß einem Ausführungsbeispiel ist zumindest die dem Spalt 226 zugewandte Oberfläche der Symbolschicht 213 als eine plane Fläche ausgeführt. Die Symbolschicht 213 kann dabei durch eine beschichtete Folie ausgeformt sein.

Gemäß diesem Ausführungsbeispiel weist die Anzeigevorrichtung 100 eine als Lichtschacht 528 ausgeführte Lichtleiteinrichtung auf. Der Lichtschacht 528 wird an einem Ende von der Symbolschicht 213 und am anderen Ende von einem Träger 435 abgeschlossen. Der Lichtschacht 528 kann zylinderförmig ausgeführt sein und weist eine Längserstreckungsrichtung auf, die gemäß diesem Ausführungsbeispiel orthogonal zu der Deckschicht 210 ausgerichtet ist. Wände des Lichtschachts 528 werden durch eine Zwischenkomponente 420 gebildet, die zwischen der Symbolschicht 213 und dem Träger 435 angeordnet ist. Bei dem Lichtschacht 528 kann es sich somit um eine Durchgangsöffnung in der Zwischenkomponente 420 handeln.

An dem Träger 435 ist ein Leuchtmittel 437 angeordnet. Gemäß diesem Ausführungsbeispiel ist das Leuchtmittel 437 auf einer Oberfläche des Trägers 435 innerhalb des Lichtschachts 528 angeordnet. Das Leuchtmittel 435, beispielsweise eine Leuchtdiode oder eine andere geeignete Lichtquelle, ist ausgebildet, um Licht 232 in Richtung der Symbolschicht 213 auszusenden. Licht 232, das auf die Symbolfläche 216 trifft, kann diese passieren und durchdringt anschließend die Trägerschicht 513, den Spalt 226 sowie die Deckschicht 210, wie es bereits anhand von Fig. 2 beschrieben ist. Auf die lichtundurchlässige Fläche 214 treffendes Licht wird dagegen von der lichtundurchlässigen Fläche 214 absorbiert oder reflektiert.

Entsprechend zu der beschriebenen Anordnung aus Leuchtmittel 437, Lichtschacht 528, Symbolfläche 216 mit umgebender lichtundurchlässiger Fläche 214 sowie in Ausbreitungsrichtung des Lichts dahinter angeordnetem Spalt 226 und Deckschicht 210 weist die Anzeigevorrichtung 100 zur Anzeige eines weiteren Symboles eine weitere Anordnung auf, die in der Darstellung in Fig. 5 links neben der beschriebenen Anordnung angeordnet ist und ein weiteres Leuchtmittel 439, einen weiteren Lichtschacht 529, und eine weitere Symbolfläche 516 mit der umgebenden lichtundurchlässigen Fläche 214 aufweist. In Ausbreitungsrichtung des von der weiteren Lichtquelle 439 aussendbaren Lichts ist hinter der Symbolfläche 516 der Spalt 226 und die Deckschicht 210 angeordnet. Zur Anzeige noch zwei weiterer Symbole weist die Anzeigevorrichtung noch zwei in gleicher Weise ausgeführte Anordnungen auf, die der Übersichtlichkeit halber in Fig. 5 nicht mit Bezugszeichen versehen sind. Die Zwischenkomponente 420 dient hier zur Abgrenzung der einzelnen Lichtschächte der einzelnen Anordnungen. Die Deckschicht 210, der Spalt 226 sowie die Symbolschicht 213 erstrecken sich durchgängig über die vier gezeigten Lichtschächte. Alternativ kann zumindest der Spalt 226 Unterbrechungen zwischen den Lichtschächten 528, 529 aufweisen.

Gemäß einem Ausführungsbeispiel ist die Deckschicht 210 aus Polymethylmethacrylat (PMMA) oder Polycarbonate (PC) hergestellt. Der Spalt 226 ist als ein Luftspalt ausgeführt. Die Trägerschicht 513 ist als eine PC- oder PMMA-Folie ausgeführt. Die lichtundurchlässige Fläche 214 ist als eine lichtundurchlässige Lackierung und die Symbolfläche 216 als eine eine lichtdurchlässige Lackierung der Trägerschicht 513 ausgeführt. Die Symbolfläche 216 weist eine Abstrahlcharakteristik auf, durch die das auf die Symbolfläche 216 einfallende Licht 232 eine diffuse Streuung erfährt. Reflektierte Lichtstrahlen 532 des Lichts 232, die nach Verlassen der Symbolfläche 216 die Deckschicht 210 nicht durchdringen, sondern an der Außenoberfläche der Deckschicht 210 reflektiert werden, werden an der Übergangsfläche zwischen der Deckschicht 210 und dem Spalt 226 erneut reflektiert, sodass sie nicht in den Spalt 226 austreten.

Im Unterschied zu der in Fig. 4 dargestellten Anzeigevorrichtung, kann gemäß der anhand von Fig. 5 beschriebenen Anzeigevorrichtung 100 eine Überstrahlung zu den benachbarten Symbolen verhindert werden, indem die Symbolflächen 216, 516 von der klaren Komponente in Form der Deckschicht 210 gelöst wird. Gemäß einem Ausführungsbeispiel wird hierzu die Symbolschicht 213 in Form einer hinterlackierten Folie verwendet, auf welcher ein lichtundurchlässiger Lack zum Ausformen der Fläche 214 und ein lichtdurchlässiger, ggf. farbgebender, Lack zum Ausformen der Symbolfläche 216 aufgebracht ist, welche in Verbindung bestimmte Symbole darstellen. Beispielsweise können Symbole für Schaltstellungen P, R, N und D dargestellt werden. Auf die Symbolschicht 213 in Form der Folie wird die Deckschicht 210 in Form einer durchsichtigen Komponente (PC oder PMMA) gelegt und kann formschlüssig mit dieser verbunden werden. Dadurch, dass in diesem Fall die Verbindung gemäß einem Ausführungsbeispiel nicht stoffschlüssig ist, kann der Überstrahlungseffekt durch den dabei entstandenen Luftspalt 226 verhindert werden. Die Lichtstrahlen haben aufgrund der Totalreflexion nicht mehr die Möglichkeit, am die Symbolfläche 216 bildenden lichtdurchlässigen Lack der daneben liegenden Symbole zu zerstreuen, wodurch keine Überstrahlungseffekte mehr zu sehen sind.

Die Deckschicht 210 in Form der durchsichtigen Komponente weist in den Bereichen der Symbole keine Struktur (Erodier-Struktur o.ä.) auf, damit die Ausbreitung der Lichtstrahlen nicht gestört wird. Ansonsten würde dies zu einer Auslenkung der Lichtstrahlen führen, was für das menschliche Auge sichtbar wäre. Um den Effekt der Totalreflexion zu erzielen, wird die Oberfläche der durchsichtigen Komponente glänzend (möglichst Hochglanz) ausgeführt.

Durch diese Totalreflexion werden die sich im Material der Deckschicht 210 befindenden Lichtstrahlen abgelenkt und sind somit nicht für den Beobachter zu sehen. Dabei gehen diese anschließend langsam komplett verloren und es tritt keine Überstrahlung auf.

Fig. 6 zeigt eine schematische Darstellung einer erfindungsgemäßen Anzeigevorrichtung 100 zur Anzeige zumindest eines Symbols gemäß einem Ausführungsbeispiel der vorliegenden Erfindung. Die Anzeigevorrichtung 100 entspricht der anhand von Fig. 5 gezeigten Anzeigevorrichtung, mit dem Unterschied, dass die Symbolschicht 213 im Bereich der Symbolflächen 216, 516 jeweils in die Lichtschächte 528, 529 hineingewölbt ist und außerhalb der Auswölbungen direkt mit der Deckschicht 210 verbunden ist, beispielsweise an der Deckschicht 210 anliegt. Somit weist die Anzeigevorrichtung 100 keinen sich über die Gesamtfläche der Deckschicht 210 erstreckenden Spalt, sondern pro Symbolfläche 215, 516 einen separaten Spalt 626, 627 auf. Die Auswölbungen der Symbolschicht 213 weisen je einen schrägen Randbereich und einen von dem Randbereich umgegebenen, parallel zu der angrenzenden Deckschicht 210 verlaufenden Bereich auf, in dem jeweils eine der Symbolflächen 216, 516 angeordnet ist. Durch die Auswölbungen gebildete Senken bilden die Spalte 626, 627.

Gemäß einem Ausführungsbeispiel wird eine die Symbolfläche 213 bildende Folie so ausgeformt, dass diese im Bereich der Symbole jeweils einen Luftspalt 626, 627 bildet. Die Verbindung zwischen der die Lichtschächte 528, 529 bildenden Zwischenkomponente 420, der die Symbolfläche 213 bildenden Folie und der durch eine klare Komponente geformte Deckschicht 210 kann in diesem Fall form-, oder stoffschlüssig, beispielsweise durch kleben oder ähnliches, erfolgen. Alternativ zur form- und/oder stoffschlüssigen Verbindung kann hier und bei den anderen Ausführungsbeispielen das Laserdurchlichtschweiß-Verfahren verwendet werden.

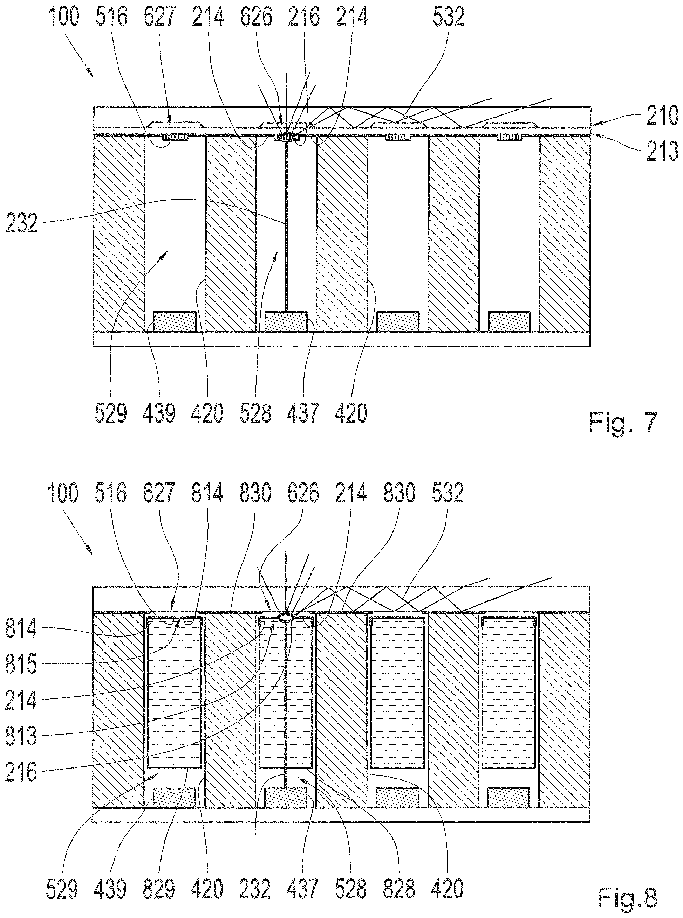

Fig. 7 zeigt eine schematische Darstellung einer erfindungsgemäßen Anzeigevorrichtung 100 zur Anzeige zumindest eines Symbols gemäß einem Ausführungsbeispiel der vorliegenden Erfindung. Die Anzeigevorrichtung 100 entspricht der anhand von Fig. 5 gezeigten Anzeigevorrichtung, mit dem Unterschied, dass die Deckschicht 210 gegenüberliegend zu den Symbolflächen 216, 516 jeweils eine Ausnehmung aufweist und außerhalb der Ausnehmungen direkt mit der Symbolschicht 213 verbunden ist. Somit weist die Anzeigevorrichtung 100 keinen sich über die Gesamtfläche erstreckenden Spalt, sondern pro Symbolfläche 215, 516 einen separaten Spalt 626, 627 auf. Die Ausnehmungen der Deckschicht 210 weisen je einen schrägen Randbereich und einen von dem Randbereich umgegebenen, parallel zu der Symbolschicht 213 verlaufenden Bereich auf, dem jeweils eine der Symbolflächen 216, 516 gegenüberliegend angeordnet ist. Durch die Ausnehmungen gebildete Senken bilden die Spalte 626, 627. Die Ausnehmungen können auch indirekt durch umgebende Erhebungen in der Oberfläche der Deckschicht 210 ausgeformt werden.

Gemäß einem Ausführungsbeispiel werden entsprechende leichte Erhebungen in der als klare Komponente ausgeführten Deckschicht 210 angebracht, was den Vorteil bringt, dass die Symbolschicht 213, beispielsweise in Form einer Folie, nicht verformt werden muss, und dennoch ein ähnlichen Effekt zu dem anhand von Fig. 6 beschriebenen Ausführungsbeispiel erzielt wird. Auch hier kann die Verbindung zwischen Lichtschacht 528, 529, Symbolschicht 213 und Deckschicht 210 form-, oder stoffschlüssig (kleben o.ä.) erfolgen.

Fig. 8 zeigt eine schematische Darstellung einer nichterfindungsgemäßen Anzeigevorrichtung 100 zur Anzeige zumindest eines Symbols gemäß einem Ausführungsbeispiel der vorliegenden Erfindung. Die Anzeigevorrichtung 100 entspricht der anhand von Fig. 5 gezeigten Anzeigevorrichtung, mit dem Unterschied, dass innerhalb der Lichtschächte 528, 529 je ein Lichtleiter 828, 829 angeordnet und auf den der Deckschicht 210 zugewandten Enden der Lichtleiter 828, 829 je eine Symbolschicht 813, 815 angeordnet ist. Die Symbolschichten 813, 815 weisen jeweils eine lichtdurchlässige Symbolfläche 216, 516 und die Symbolflächen umgebende lichtundurchlässige Flächen 214, 814 auf. Anstelle eines sich über die Gesamtfläche erstreckenden Spalts, ist gegenüber jeder der Symbolflächen 216, 516 ein separater Spalt 626, 627 zwischen den Symbolflächen 216, 516 und der Deckschicht 210 ausgeformt. Gemäß diesem Ausführungsbeispiel werden die Spalte 626, 627 durch eine Abstandsschicht 830 ausgeformt, die zwischen der Deckschicht 210 und der Zwischenkomponente 420 angeordnet ist und in die Lichtschächte 528, 529 hineinragende Überstände aufweist, die als Abstandshalter für die mit den Symbolschichten 813, 815 an die Abstandsschicht 830 angrenzenden Lichtleiter 828, 829 fungiert. Zum Ausbilden der Spalte 626, 627 weist die Abstandsschicht 830 gegenüberliegend zu den Symbolflächen 216, 516 Durchgangsöffnungen zum Ausformen der Spalte 626, 627 auf.

Gemäß einem Ausführungsbeispiel ist die Abstandsschicht 830 als eine lichtundurchlässige Lackierung oder als eine lackierte PC- oder PMMA-Folie ausgeführt, die im Bereich der Spalte 626, 627 je eine Freimachung, also keinen Lack oder ähnliches aufweisen. Die Lichtleiter 828, 829 können jeweils als hinterspritze Folie mit Symbol oder mit Lackierung ausgeführt sein.

Gemäß einem Ausführungsbeispiel wird an der Deckschicht 210 in Form einer klaren Komponente die Abstandsschicht 830 in Form eines lichtundurchlässigen Lacks oder einer Folie (2 Komponenten) mit Aussparungen in Form von Fenstern oder Freimachungen angebracht. An diese Aussparungen wird je ein Lichtleiter 828, 829 gelegt, gedrückt o.ä., der an der Oberfläche z.B. je die Symbolschicht 813, 815, beispielsweise in Form einer Folie hat, die mit lichtundurchlässigem Lack und lichtdurchlässigem Lack (für das Symbol) ausgestattet ist. Da hier zwischen der weißen Lackierung, beispielsweise für die Symbolflächen 216, 516 und der Deckschicht 210 in Form der klaren Komponente keine stoffschlüssige Verbindung besteht (Luft zwischen Lichtleiter 828, 829 und Deckschicht 210), wird die Überstrahlung ebenfalls vermieden.

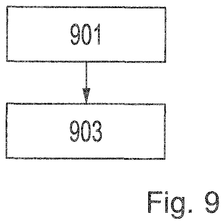

Fig. 9 zeigt ein Ablaufdiagramm eines Verfahrens zum Herstellen einer Anzeigevorrichtung zur Anzeige zumindest eines Symbols gemäß einem Ausführungsbeispiel der vorliegenden Erfindung. Beispielsweise kann unter Verwendung des Verfahrens eine Anzeigevorrichtung hergestellt werden, wie sie anhand der vorangegangenen Figuren beschrieben ist.

In einem Schritt 901 werden die Einzelkomponenten der Anzeigevorrichtung, beispielsweise eine lichtdurchlässige Deckschicht, einer Symbolschicht mit einer lichtdurchlässigen Symbolfläche und einer die Symbolfläche umgebenden lichtundurchlässigen Fläche sowie eine Lichtleiteinrichtung separat oder bereits teilkombiniert bereitgestellt. In einem Schritt 903 werden die Einzelkomponenten miteinander zu der Anzeigevorrichtung kombiniert. Dabei können beispielsweise Verbindungstechniken zur Erstellung formschlüssiger und/oder stoffschlüssiger Verbindungen eingesetzt werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Anzeigevorrichtung
- 102: Fahrzeug
- 104: Getriebe
- 106: Schaltvorrichtung

- 210: Deckschicht
- 212: Hartstoffbeschichtung
- 213: Symbolschicht
- 214: lichtundurchlässige Fläche
- 216: Symbolfläche
- 226: Spalt
- 228: Lichtleiteinrichtung
- 232: Licht

- 316: weitere Symbolfläche
- 317: weitere Symbolfläche
- 318: weitere Symbolfläche

- 400: Anzeigevorrichtung
- 414: lichtundurchlässige Schicht
- 422: Lichtschacht
- 424: weiterer Lichtschacht
- 435: Leiterplatte
- 437: Leuchtmittel
- 439: weiteres Leuchtmittel
- 441: Farbschicht
- 443: weitere Farbschicht
- 445: Abstrahlcharakteristik
- 447: weitere Abstrahlcharakteristik

- 513: Trägerschicht
- 516: weitere Symbolfläche
- 528: Lichtschacht
- 529: weiterer Lichtschacht
- 532: reflektiertes Licht

- 626: Spalt
- 627: weiterer Spalt

- 813: Symbolschicht
- 814: weitere lichtundurchlässige Fläche
- 815: weitere Symbolschicht
- 828: Lichtleiter
- 829: weiterer Lichtleiter
- 830: Abstandsschicht

- 901: Schritt des Bereitstellens
- 903: Schritt des Kombinierens

## Patentansprüche

1. Anzeigevorrichtung (100) für ein Fahrzeug (102), zur Anzeige zumindest eines Symbols, wobei die Anzeigevorrichtung (100) die folgenden Merkmale aufweist:
eine lichtdurchlässige Deckschicht (210);
eine Symbolschicht (213; 813) mit einer lichtdurchlässigen Symbolfläche (216) für ein von der Anzeigevorrichtung (100) anzuzeigendes Symbol und einer die Symbolfläche (216) umgebenden lichtundurchlässigen Fläche (214), wobei die Symbolfläche (216) durch einen Spalt (226; 626) beabstandet zu der Deckschicht (210) angeordnet ist; und
eine Lichtleiteinrichtung (228; 528; 828), die ausgeformt ist, um Licht (232) auf eine der Deckschicht (210) abgewandten Seite der Symbolfläche (216) zu leiten, **dadurch gekennzeichnet, dass** die Deckschicht (210) gegenüberliegend zu der Symbolfläche (216) eine Ausnehmung zum Ausformen des Spalts (626) aufweist.

2. Anzeigevorrichtung (100) gemäß Anspruch 1, **dadurch gekennzeichnet, dass** die Lichtleiteinrichtung (228) als ein Lichtschacht (528) ausgeführt ist und die Symbolschicht (213) eine Öffnung des Lichtschachts (528) überspannt.

3. Anzeigevorrichtung (100) gemäß einem der vorangegangenen Ansprüche, **dadurch gekennzeichnet, dass** die Symbolschicht (213; 813) als eine Folie ausgeführt ist.

4. Anzeigevorrichtung (100) gemäß einem der vorangegangenen Ansprüche, **dadurch gekennzeichnet, dass** die Symbolschicht (213; 813) als eine plane Fläche ausgeführt ist.

5. Anzeigevorrichtung (100) für ein Fahrzeug (102), zur Anzeige zumindest eines Symbols, wobei die Anzeigevorrichtung (100) die folgenden Merkmale aufweist:
eine lichtdurchlässige Deckschicht (210);
eine Symbolschicht (213; 813) mit einer lichtdurchlässigen Symbolfläche (216) für ein von der Anzeigevorrichtung (100) anzuzeigendes Symbol und einer die Symbolfläche (216) umgebenden lichtundurchlässigen Fläche (214), wobei die Symbolfläche (216) durch einen Spalt (226; 626) beabstandet zu der Deckschicht (210) angeordnet ist; und
eine Lichtleiteinrichtung (228; 528; 828), die ausgeformt ist, um Licht (232) auf eine der Deckschicht (210) abgewandten Seite der Symbolfläche (216) zu leiten, **dadurch gekennzeichnet, dass** die Symbolschicht (213) eine die Symbolfläche (216) umfassende Auswölbung zum Ausformen des Spalts (626) aufweist.

6. Anzeigevorrichtung (100) gemäß Anspruch 5, **dadurch gekennzeichnet, dass** die Lichtleiteinrichtung (228) als ein Lichtschacht (528) ausgeführt ist und die Symbolschicht (213) eine Öffnung des Lichtschachts (528) überspannt.

7. Anzeigevorrichtung (100) gemäß Anspruch 5 oder 6, **dadurch gekennzeichnet, dass** die Symbolschicht (213; 813) als eine Folie ausgeführt ist.

8. Anzeigevorrichtung (100) gemäß einem der Ansprüche 5 bis 7, **dadurch gekennzeichnet, dass** die Deckschicht (210) gegenüberliegend zu der Symbolfläche (216) eine Ausnehmung zum Ausformen des Spalts (626) aufweist.

9. Anzeigevorrichtung (100) gemäß einem der vorangegangenen Ansprüche, **dadurch gekennzeichnet, dass** die Lichtleiteinrichtung (228) als ein Lichtleiter (828) ausgeführt ist und die Symbolschicht (813) an einer der Deckschicht (210) zugewandten Oberfläche des Lichtleiters (828) angeordnet ist.

10. Anzeigevorrichtung (100) gemäß Anspruch 9, **dadurch gekennzeichnet, dass** zum Ausformen des Spalts (226) eine Abstandsschicht (830) zwischen der Deckschicht (210) und der lichtundurchlässigen Fläche (214) der Symbolschicht (813) angeordnet ist.

11. Anzeigevorrichtung (100) gemäß einem der vorangegangenen Ansprüche, **dadurch gekennzeichnet, dass** ein Leuchtmittel (437) zum Ausstrahlen des Lichts (232) an einem der Symbolfläche (216) abgewandten Ende der Lichtleiteinrichtung (228; 528; 828) angeordnet ist.

12. Anzeigevorrichtung (100) gemäß einem der vorangegangenen Ansprüche, **dadurch gekennzeichnet, dass** die Symbolschicht (213, 813) oder eine weitere Symbolschicht (815) eine weitere lichtdurchlässige Symbolfläche (516) für ein von der Anzeigevorrichtung (100) anzuzeigendes weiteres Symbol aufweist, wobei die weitere Symbolfläche (516) von der lichtundurchlässigen Fläche (214) oder einer weiteren lichtundurchlässigen Fläche (814) umgeben ist und durch den Spalt (226) oder einen weiteren Spalt (627) beabstandet zu der Deckschicht (210) angeordnet ist, und wobei eine weitere Lichtleiteinrichtung (529) vorhanden ist, um weiteres Licht auf eine der Deckschicht (210) abgewandten Seite der weiteren Symbolfläche (516) zu leiten.

13. Schaltvorrichtung (106) zum Schalten eines Fahrzeuggetriebes (104), **dadurch gekennzeichnet, dass** die Schaltvorrichtung (106) eine Anzeigevorrichtung (100) gemäß einem der vorangegangenen Ansprüche zum Anzeigen einer eingestellten Betriebsstufe des Fahrzeuggetriebes (104) unter Verwendung des zumindest einen Symbols aufweist.

14. Verfahren zum Herstellen einer Anzeigevorrichtung (100) für ein Fahrzeug (102) zur Anzeige zumindest eines Symbols, **dadurch gekennzeichnet, dass** das Verfahren die folgenden Schritte umfasst:
Bereitstellen (901) einer lichtdurchlässigen Deckschicht (210), einer Symbolschicht (213, 813) mit einer lichtdurchlässigen Symbolfläche (216) für ein von der Anzeigevorrichtung (100) anzuzeigendes Symbol und einer die Symbolfläche (216) umgebenden lichtundurchlässigen Fläche (214) sowie einer Lichtleiteinrichtung (228; 528; 828); und
Kombinieren (903) der Deckschicht (210), der Symbolschicht (213, 813) und der Lichtleiteinrichtung (228; 528; 828), wobei die Symbolfläche (216) durch einen Spalt (226; 626) beabstandet zu der lichtdurchlässigen Deckschicht (210) angeordnet wird, und die Lichtleiteinrichtung (228; 528; 828) angeordnet wird, um Licht (232) auf eine der Deckschicht (210) abgewandten Seite der Symbolfläche (216) zu leiten, wobei die Symbolschicht (213) eine die Symbolfläche (216) umfassende Auswölbung zum Ausformen des Spalts (626) aufweist.

15. Verfahren zum Herstellen einer Anzeigevorrichtung (100) für ein Fahrzeug (102) zur Anzeige zumindest eines Symbols, **dadurch gekennzeichnet, dass** das Verfahren die folgenden Schritte umfasst:
Bereitstellen (901) einer lichtdurchlässigen Deckschicht (210), einer Symbolschicht (213, 813) mit einer lichtdurchlässigen Symbolfläche (216) für ein von der Anzeigevorrichtung (100) anzuzeigendes Symbol und einer die Symbolfläche (216) umgebenden lichtundurchlässigen Fläche (214) sowie einer Lichtleiteinrichtung (228; 528; 828); und
Kombinieren (903) der Deckschicht (210), der Symbolschicht (213, 813) und der Lichtleiteinrichtung (228; 528; 828), wobei die Symbolfläche (216) durch einen Spalt (226; 626) beabstandet zu der lichtdurchlässigen Deckschicht (210) angeordnet wird, und die Lichtleiteinrichtung (228; 528; 828) angeordnet wird, um Licht (232) auf eine der Deckschicht (210) abgewandten Seite der Symbolfläche (216) zu leiten, wobei die Deckschicht (210) gegenüberliegend zu der Symbolfläche (216) eine Ausnehmung zum Ausformen des Spalts (626) aufweist.

## Claims

1. Display apparatus (100) for a vehicle (102) for displaying at least one symbol, wherein the display apparatus (100) has the following features:
a light-transmissive cover layer (210);
a symbol layer (213; 813) having a light-transmissive symbol area (216) for a symbol to be displayed by the display apparatus (100) and having an opaque area (214) surrounding the symbol area (216), wherein the symbol area (216) is arranged in a manner such that it is spaced apart from the cover layer (210) by a gap (226; 626); and
a light-guiding device (228; 528; 828), which is designed to guide light (232) onto a side of the symbol area (216) that faces away from the cover layer (210), **characterized in that** the cover layer (210) has, opposite the symbol area (216), a cutout for forming the gap (626).

2. Display apparatus (100) according to Claim 1, **characterized in that** the light-guiding device (228) is embodied in the form of a light shaft (528) and the symbol layer (213) covers an opening of the light shaft (528).

3. Display apparatus (100) according to either of the preceding claims, **characterized in that** the symbol layer (213; 813) is embodied in the form of a film.

4. Display apparatus (100) according to one of the preceding claims, **characterized in that** the symbol layer (213; 813) is embodied in the form of a planar area.

5. Display apparatus (100) for a vehicle (102) for displaying at least one symbol, wherein the display apparatus (100) has the following features:
a light-transmissive cover layer (210);
a symbol layer (213; 813) having a light-transmissive symbol area (216) for a symbol to be displayed by the display apparatus (100) and having an opaque area (214) surrounding the symbol area (216), wherein the symbol area (216) is arranged in a manner such that it is spaced apart from the cover layer (210) by a gap (226; 626); and
a light-guiding device (228; 528; 828), which is designed to guide light (232) onto a side of the symbol area (216) that faces away from the cover layer (210), **characterized in that** the symbol layer (213) has a protrusion comprising the symbol area (216) for forming the gap (626) .

6. Display apparatus (100) according to Claim 5, **characterized in that** the light-guiding device (228) is embodied in the form of a light shaft (528) and the symbol layer (213) covers an opening of the light shaft (528).

7. Display apparatus (100) according to Claim 5 or 6, **characterized in that** the symbol layer (213; 813) is embodied in the form of a film.

8. Display apparatus (100) according to one of Claims 5 to 7, **characterized in that** the cover layer (210) has, opposite the symbol area (216), a cutout for forming the gap (626).

9. Display apparatus (100) according to one of the preceding claims, **characterized in that** the light-guiding device (228) is embodied in the form of a light guide (828) and the symbol layer (813) is arranged on a surface of the light guide (828) that faces away from the cover layer (210).

10. Display apparatus (100) according to Claim 9, **characterized in that** a spacer layer (830) is arranged between the cover layer (210) and the opaque area (214) of the symbol layer (813) to form the gap (226).

11. Display apparatus (100) according to one of the preceding claims, **characterized in that** a light-emitting means (437) for emitting the light (232) is arranged at an end of the light-guiding device (228; 528; 828) that is remote from the symbol area (216).

12. Display apparatus (100) according to one of the preceding claims, **characterized in that** the symbol layer (213, 813) or a further symbol layer (815) has a further light-transmissive symbol area (516) for a further symbol that is to be displayed by the display apparatus (100), wherein the further symbol area (516) is surrounded by the opaque area (214) or by a further opaque area (814) and is arranged in a manner such that it is spaced apart from the cover layer (210) by the gap (226) or a further gap (627), and wherein a further light-guiding device (529) is present to guide further light onto a side of the further symbol area (516) that faces away from the cover layer (210).

13. Shift apparatus (106) for shifting gears of a vehicle transmission (104), **characterized in that** the shift apparatus (106) has a display apparatus (100) according to one of the preceding claims for displaying a selected operating mode of the vehicle transmission (104) using the at least one symbol.

14. Method for producing a display apparatus (100) for a vehicle (102) for displaying at least one symbol, **characterized in that** the method comprises the following steps:
providing (901) a light-transmissive cover layer (210), a symbol layer (213, 813) having a light-transmissive symbol area (216) for a symbol to be displayed by the display apparatus (100) and having an opaque area (214) surrounding the symbol area (216), and also a light-guiding device (228; 528; 828); and
combining (903) the cover layer (210), the symbol layer (213, 813) and the light-guiding device (228; 528; 828), wherein the symbol area (216) is arranged in a manner such that it is spaced apart from the light-transmissive cover layer (210) by a gap (226; 626), and the light-guiding device (228; 528; 828) is arranged to guide light (232) onto a side of the symbol area (216) that faces away from the cover layer (210), wherein the symbol layer (213) has a protrusion comprising the symbol area (216) for forming the gap (626).

15. Method for producing a display apparatus (100) for a vehicle (102) for displaying at least one symbol, **characterized in that** the method comprises the following steps:
providing (901) a light-transmissive cover layer (210), a symbol layer (213, 813) having a light-transmissive symbol area (216) for a symbol to be displayed by the display apparatus (100) and having an opaque area (214) surrounding the symbol area (216), and also a light-guiding device (228; 528; 828); and
combining (903) the cover layer (210), the symbol layer (213, 813) and the light-guiding device (228; 528; 828), wherein the symbol area (216) is arranged in a manner such that it is spaced apart from the light-transmissive cover layer (210) by a gap (226; 626), and the light-guiding device (228; 528; 828) is arranged to guide light (232) onto a side of the symbol area (216) that faces away from the cover layer (210), wherein the cover layer (210) has, opposite the symbol area (216), a cutout for forming the gap (626).

## Revendications

1. Arrangement d'affichage (100) pour un véhicule (102), destiné à afficher au moins un symbole, l'arrangement d'affichage (100) possédant les caractéristiques suivantes :
une couche de recouvrement (210) transparente ;
une couche de symbole (213 ; 813) ayant une surface de symbole (216) transparente pour un symbole à afficher par l'arrangement d'affichage (100) et une surface opaque (214) entourant la surface de symbole (216), la surface de symbole (216) étant disposée en étant espacée par un interstice (226 ; 626) de la couche de recouvrement (210) ; et
un dispositif guide de lumière (228 ; 528 ; 828) qui est façonné pour guider la lumière (232) sur un côté de la surface de symbole (216) opposé à la couche de recouvrement (210),
**caractérisé en ce que** la couche de recouvrement (210) possède, à l'opposé de la surface de symbole (216), un évidement destiné à façonner l'interstice (626).

2. Arrangement d'affichage (100) selon la revendication 1, **caractérisé en ce que** le dispositif guide de lumière (228) est réalisé sous la forme d'un puits de lumière (528) et la couche de symbole (213) enjambe une ouverture du puits de lumière (528).

3. Arrangement d'affichage (100) selon l'une des revendications précédentes, **caractérisé en ce que** la couche de symbole (213 ; 813) est réalisée sous la forme d'un film.

4. Arrangement d'affichage (100) selon l'une des revendications précédentes, **caractérisé en ce que** la couche de symbole (213 ; 813) est réalisée sous la forme d'une surface plane.

5. Arrangement d'affichage (100) pour un véhicule (102), destiné à afficher au moins un symbole, l'arrangement d'affichage (100) possédant les caractéristiques suivantes :
une couche de recouvrement (210) transparente ;
une couche de symbole (213 ; 813) ayant une surface de symbole (216) transparente pour un symbole à afficher par l'arrangement d'affichage (100) et une surface opaque (214) entourant la surface de symbole (216), la surface de symbole (216) étant disposée en étant espacée par un interstice (226 ; 626) de la couche de recouvrement (210) ; et
un dispositif guide de lumière (228 ; 528 ; 828) qui est façonné pour guider la lumière (232) sur un côté de la surface de symbole (216) opposé à la couche de recouvrement (210),
**caractérisé en ce que** la couche de symbole (213) possède une concavité englobant la surface de symbole (216) et destinée à façonner l'interstice (626).

6. Arrangement d'affichage (100) selon la revendication 5, **caractérisé en ce que** le dispositif guide de lumière (228) est réalisé sous la forme d'un puits de lumière (528) et la couche de symbole (213) enjambe une ouverture du puits de lumière (528).

7. Arrangement d'affichage (100) selon la revendication 5 ou 6, **caractérisé en ce que** la couche de symbole (213 ; 813) est réalisée sous la forme d'un film.

8. Arrangement d'affichage (100) selon l'une des revendications 5 à 7, **caractérisé en ce que** la couche de recouvrement (210), à l'opposé de la surface de symbole (216), présente un évidement destiné à façonner l'interstice (626).

9. Arrangement d'affichage (100) selon l'une des revendications précédentes, **caractérisé en ce que** le dispositif guide de lumière (228) est réalisé sous la forme d'un guide d'ondes optiques (828) et la couche de symbole (813) est disposée au niveau d'une surface du guide d'ondes optiques (828) faisant face à la couche de recouvrement (210).

10. Arrangement d'affichage (100) selon la revendication 9, **caractérisé en ce qu'**une couche d'espacement (830) est disposée entre la couche de recouvrement (210) et la surface opaque (214) de la couche de symbole (813) en vue de façonner l'interstice (226) .

11. Arrangement d'affichage (100) selon l'une des revendications précédentes, **caractérisé en ce qu'**un moyen lumineux (437) destiné à émettre la lumière (232) est disposé au niveau d'une extrémité du dispositif guide de lumière (228 ; 528 ; 828) à l'opposé de la surface de symbole (216).

12. Arrangement d'affichage (100) selon l'une des revendications précédentes, **caractérisé en ce que** la couche de symbole (213, 813) ou une couche de symbole supplémentaire (815) possède une surface de symbole transparente supplémentaire (516) pour un symbole supplémentaire à afficher par l'arrangement d'affichage (100), la surface de symbole supplémentaire (516) étant entourée par la surface opaque (214) ou une surface opaque supplémentaire (814) et étant disposée en étant espacée par l'interstice (226) ou un interstice supplémentaire (627) de la couche de recouvrement (210), et un dispositif guide de lumière supplémentaire (529) étant présent afin de guider de la lumière supplémentaire sur un côté de la surface de symbole supplémentaire (516) opposé à la couche de recouvrement (210).

13. Arrangement de changement de rapport (106) destiné à changer les rapports d'une boîte de vitesses de véhicule (104), **caractérisé en ce que** l'arrangement de changement de rapport (106) possède un arrangement d'affichage (100) selon l'une des revendications précédentes destiné à afficher un rapport de fonctionnement réglé de la boîte de vitesses de véhicule (104) en utilisant l'au moins un symbole.

14. Procédé de fabrication d'un arrangement d'affichage (100) pour un véhicule (102) destiné à afficher au moins un symbole, **caractérisé en ce que** le procédé comprend les étapes suivantes :
fourniture (901) d'une couche de recouvrement (210) transparente, d'une couche de symbole (213, 813) ayant une surface de symbole (216) transparente pour un symbole à afficher par l'arrangement d'affichage (100) et d'une surface opaque (214) entourant la surface de symbole (216) ainsi que d'un dispositif guide de lumière (228 ; 528 ; 828) ; et
combinaison (903) de la couche de recouvrement (210), de la couche de symbole (213, 813) et du dispositif guide de lumière (228 ; 528 ; 828), la surface de symbole (216) étant disposée en étant espacée par un interstice (226 ; 626) de la couche de recouvrement (210) transparente et le dispositif guide de lumière (228 ; 528 ; 828) étant disposé de manière à guider la lumière (232) sur un côté de la surface de symbole (216) opposé à la couche de recouvrement (210), la couche de symbole (213) possédant une concavité englobant la surface de symbole (216) et destinée à façonner l'interstice (626).

15. Procédé de fabrication d'un arrangement d'affichage (100) pour un véhicule (102) destiné à afficher au moins un symbole, **caractérisé en ce que** le procédé comprend les étapes suivantes :
fourniture (901) d'une couche de recouvrement (210) transparente, d'une couche de symbole (213, 813) ayant une surface de symbole (216) transparente pour un symbole à afficher par l'arrangement d'affichage (100) et d'une surface opaque (214) entourant la surface de symbole (216) ainsi que d'un dispositif guide de lumière (228 ; 528 ; 828) ; et
combinaison (903) de la couche de recouvrement (210), de la couche de symbole (213, 813) et du dispositif guide de lumière (228 ; 528 ; 828), la surface de symbole (216) étant disposée en étant espacée par un interstice (226 ; 626) de la couche de recouvrement (210) transparente et le dispositif guide de lumière (228 ; 528 ; 828) étant disposé de manière à guider la lumière (232) sur un côté de la surface de symbole (216) opposé à la couche de recouvrement (210), la couche de recouvrement (210) possédant, à l'opposé de la surface de symbole (216), un évidement destiné à façonner l'interstice (626).
